(19) Europäisches Patentamt
European Patent Office
Office européen des brevets

(11) Publication number : 0 499 483 A1

# (12) EUROPEAN PATENT APPLICATION

(21) Application number : 92301232.2

(22) Date of filing : 14.02.92

(51) Int. Cl.$^5$ : C09J 4/00

(30) Priority : 14.02.91 JP 105275/91

(43) Date of publication of application :
19.08.92 Bulletin 92/34

(84) Designated Contracting States :
DE FR GB

(71) Applicant : THREE BOND CO., LTD.
1456, Hazama-cho
Hachioji-shi Tokyo (JP)

(72) Inventor : Hara, Osamu
1456 Hazama-cho
Hachioji-shi, Tokyo (JP)

(74) Representative : Cropp, John Anthony David et al
MATHYS & SQUIRE 10 Fleet Street
London, EC4Y 1AY (GB)

## (54) Anaerobic adhesive composition.

(57) There is provided an anaerobic adhesive composition high in curing speed and superior in preservability, comprising

(a) o-benzoic sulfimide, (b) an organic hydrazine compound, (c) an organic isocyanate compound or a carboxylic acid anhydride and (d) an organic peroxide incorporated in a polymerizable acrylate ester.

EP 0 499 483 A1

Background of the Invention

The present invention relates to an anaerobic adhesive composition and more particularly to an anaerobic adhesive composition which cures at room temperature between adjacent surfaces, for example in a fine gap of metal, in an extremely short time and exhibits an excellent bonding and sealing effect.

Various anaerobic adhesive (incl. filler) compositions have heretofore been known, typical of which is a combination of a polymerizable acrylate ester such as polyethylene glycol dimethacrylate or urethane acrylate with a peroxide initiator and a polymerization inhibitor which is for enhancing stability. If desired, this combination further incorporates therein a polymerization accelerator, examples of which are amines, amides and imides. The polymerization accelerator functions to increase the curing speed of the composition and permit long-term preservation. However, many of the conventional polymerization accelerators involve drawbacks, for example, low stability or curing speed of the adhesives, so should be further improved.

In many cases, moreover, in such multi-ingredient type anaerobic adhesive compositions,the effect obtained differs greatly, depending on the ingredients used, and so it has been strongly desired to develop a combination which fully satisfies both curing speed and preservability.

The present invention resides in an anaerobic adhesive composition having a quick curing property and comprising a polymerizable acrylate ester. (a) o-benzoic sulfimide, (b) an organic hydrazine compound, (c) an organic isocyanate compound or a carboxylic acid anhydride and (d) an organic peroxide.

When o-benzoic sulfimide and an organic hydrazine compound are combined together and further combined with an organic isocyanate compound or a carboxylic acid anhydride, an excellent effect is exhibited selectively in comparison with the case where the o-benzoic sulfimide and organic hydrazine compound are each independently added to a polymerizable acrylic acid ester containing an organic peroxide.

The organic hydrazine compound used in the present invention is a compound represented by the following general formula:

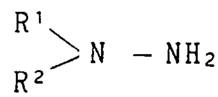

wherein $R^1$ represents hydrogen, alkyl, cycloalkyl, aryl, alkenyl, or arylsulfonyl, the number of carbon atoms of $R^1$ is preferably not larger than about 10, and $R^2$ represents Hydrogen, alkyl, cycloalkyl, alkenyl, aryl, carbonyl, or a group represented as follows:

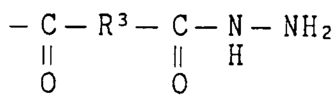 , 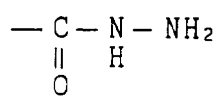

where $R^3$ represents an alkylene group having 1 to about 10 carbon atoms, an alkenyl group having 2 to about 10 carbon atoms, or an aryl group having up to 10 carbon atoms.

Typical examples of the organic hydrazine compound include hydrazine, methylhydrazine, phenylhydrazine, 1,1-dimethylhydrazine, hydroxyethylhydrazine, 1,1-diphenylhydrazine, 1-methyl-1-phenylhydrazine, carbodihydrazine, adipic dihydrazine, sebacic dihydrazide, dodecane-dicarboxylic acid dihydrazide, isophthalic dihydrazide, maleic hydrazide, benzophenone hydrazone, benzensulfonyl hydrazide, and p-toluenesulfonyl hydrazide. Of course, no limitation is made to these compounds. The amount of the organic hydrazine compound to be used is preferably in the range of 0.001 to 5, more preferably 0.005 to 3, parts by weight based on 100 parts by weight (also in the following) of the polymerizable acrylate ester. A too small amount thereof will result in decrease of the curing speed, and even if it is too large, it is impossible to expect any improvement of effect.

o-Benzoic sulfimide is preferably used in an amount of 0.1 to 5 wt%.

The organic isocyanate compound is a compound having one or more isocyanate groups. Particularly preferred is a substituted or unsubstituted, aliphatic or aromatic, mono- or diisocyanate having 1 to 12 carbon atoms. Examples are phenyl isocyanate, methyl isocyanate, tolylene diisocyanate, diphenylmethane diisocyanate, isophorone diisocyanate, naphtalene diisocyanate, triethoxypropyl isocyanate, and isocyanatopropyl methacrylate.

The organic carboxylic acid anhydride is a compound having one or more carboxylic acid anhydride groups. Particularly preferred is a substituted or unsubstituted, aliphatic or aromatic, dicarboxylic acid anhydride, or a

polymer derived therefrom. Examples are succinic anhydride, maleic anhydride, phthalic anhydride, trimellitic anhydride, pyromellitic anhydride, benzophenonetetracarboxylic anhydride, ethylene glycol bistrimellitate, glycerol tristrimellitate, tetrahydrophthalic anhydride, methyltetrahydrophthalic anhydride, endomethylenetetrahydrophthalic anhydride, methylendomethylenetetrahydrophthalic anhydride, methylbutenyltetrahydrophthalic anhydride, dodecenylsuccinic anhydride, hexahydrophthalic anhydride, methylhexahydrophthalic anhydride, methylcyclohexenedicarboxylic anhydride, alkylstyrene-maleic anhydride copolymer, polyazelaic anhydride, and aliphatic long-chain dibasic acid anhydrides:

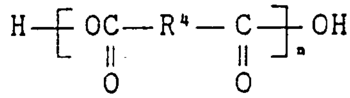

R$^4$ : 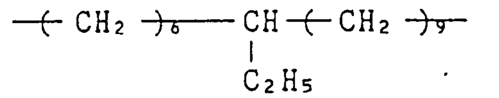 ,

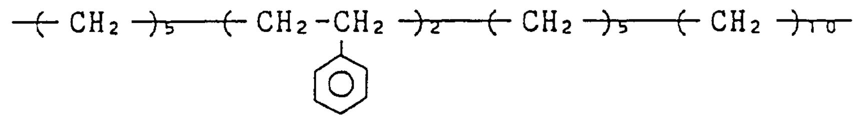 ,

$-(CH_2)_{18}-$ , etc.

n : 2 or more, e.g. 2 to 10

The organic isocyanate compound or the carboxylic acid anhydride both exemplified above is preferably used in an amount of 0.001 to 5 parts. If the amount thereof is too small, the curing speed will be decreased and the stability deteriorated, and even if it is too large, it is impossible to expect any improvement of effect.

As the polymerizable acrylate ester there may be used a known one. Typical examples are classified into polyacrylate esters and polyurethane acrylates. Examples of polyacrylate esters include di-, tri- or tetraethylene glycol dimethacrylate, di(pentamethyl glycol) dimethacrylate, tetraethylene glycol diacrylate, diglycerol acrylate, diglycerol tetramethacrylate, butylene glycol dimethacrylate, neopentyl glycol diacrylate, and trimethylolpropane triacrylate. Monofunctional acrylate esters (esters containing one acrylate group) are also employable, typical examples of which include cyclohexyl methacrylate, tetrahydrofurfuryl methacrylate, hydroxyethyl acrylate, hydroxypropyl methacrylate, t-butylaminoethyl methacrylate, and cyanoethyl acrylate. Polyurethane acrylates are reaction products of monomers having acryl group and active hydrogen, polyisocyanates and compounds having active hydrogen. Examples are reaction products of hydroxyl and amino group-containing monomers such as hydroxyethyl acrylate, hydroxyethyl methacrylate, aminoethyl methacrylate, 3-hydroxypropyl methacrylate, aminopropyl methacrylate and hydroxyhexyl acrylate, polyisocyanates such as hexamethylene diisocyanate, tolylene diisocyanate, diphenylmethane diisocyanate and isophorone diisocyanate, and polyether diols (e.g. polypropylene glycol, polytetramethylene glycol, polyethylene glycol), polyolefin diols, polybutadiene diols, polybutadieneacrylonitrile copolymer terminated diols or polyacrylicester terminated doils. As to these reaction products, bonding can be effected at room temperature or in a heated state to a temperature of about 40° to 150°C.

Typical organic peroxides employable in the invention are diacyl peroxides, dialkyl peroxides, ketone peroxides and peroxy esters. Particularly useful are such organic hydroperoxides as cumene hydroperoxide and t-butyl hydroperoxide, with cumene hydroperoxide being especially desirable. The amount of the organic peroxide used in the invention should be in the range of about 0.01 to about 10 wt%, preferably 0.1 to about 5 wt%, based on the weight of the entire composition. Other useful polymerization initiators are those which generate radicals under the radiation of ultraviolet light. Examples are carbonyl compounds, including acetophenone, benzophenone and benzoin ethers. Suitable examples of ultraviolet polymerization initiators are benzoin compounds such as benzoin, benzoin methyl ether, benzoin ethyl ether, α-methylbenzoin and α-phenylbenzoin, as well as 1-hydroxycyclohexylphenylketone, 2,2-dimethoxy-2-phenylacetophenone, diethoxyacetophenone, and 2-methyl-1-(methylthiophenyl)-2-(4-morpholinyl)-1-propanone.

The curable composition of the present invention can be prepared as a binary composition. There may be adopted a method wherein the polymerization initiator as a first component and the others as a second component are each applied to the surface to be bonded.

Where the curable composition is applied to an inert surface or between two surfaces spaced through a fairly wide gap, it is desirable to use a suitable primer.

[Examples]

Example 1

3 parts of o-benzoic sulfimide was added to 100 parts by weight of triethylene glycol dimethacrylate, followed by dissolving under heating at 50°C for 4 hours and subsequent cooling to room temperature. Then, 1 part by weight of cumene hydroperoxide, a predetermined amount of a hydrazine compound and 1 part of 3-isocyanatopropyl methacrylate were added and stirring was made thoroughly to prepare an anaerobic adhensive. Initial set time, time until reaching a practical strength, bonding strength, and 80°C gelation time, were measured. The results obtained are as shown in Table 1.

The initial set time is the time required until a shaft is non longer movable easily by hand after the application of the adhensive to a defatted fitting test piece, fixing and subsequent standing at 25°C. The time until reaching a practical strength is the time required until the bonding strength reaches equilibrium after bonding. The bonding strength is a value of the strength obtained when such equilibrium has been reached. The measurement of bonding strength was performed at a pulling rate of 10 mm/min, using TENSILON (a product of Orientec K.K.). For measuring the 80 °C gelation time, the adhesive was placed in a glass test tube, which was then allowed to stand in a hot air dryer held at 80°C, and the time until increase in viscosity or gelation of the adhesive was measured. Unless there is any abnormal condition at 80°C for 2 hours or more, the adhesive is stable at room temperature for one year or more. This has been confirmed by the present inventors.

[Table 1]

| Hydrazine Compound | Amount | Set Time | Time up to Practical Strength | Bonding Strength under Shear $kgf/m^2$ | 80 ℃ Gelation Time |
|---|---|---|---|---|---|
| Methylhydrazine | 0.5 | 70 sec | 40 min | 120 | > 2hr |
| Phenylhydrazine | 0.5 | 60 sec | 30 min | 150 | > 2hr |
| 1, 1-Dimethylhydrazine | 0.5 | 70 sec | 40 min | 130 | > 2hr |
| Adipic hydrazine | 0.5 | 60 sec | 30 min | 140 | > 2hr |
| Phenylhydrazine | 0.1 | 80 sec | 50 min | 160 | > 2hr |
| 1, 1-Dimethylhydrazine | 0.1 | 90 sec | 60 min | 150 | > 2hr |
| p-Toluenesulfonyl hydrazine | 0.5 | 70 sec | 40 min | 140 | > 2hr |
| p-Toluenesulfonyl hydrazine | 0.1 | 90 sec | 60 min | 130 | > 2hr |

Example 2

The hydrazine compounds used in Example 1 were substituted by 0.5 part of phenylhydrazine and a predetermined amount of an isocyanate compound was added, followed by through stirring, to prepare an anaerobic adhesive. Tests were conducted in the same way as in Example 1. The results obtained are as shown in Table 2.

[Table 2]

| Isocyanate Compound | Amount | Set Time | Time up to Practical Strength | Bonding Strength under Shear $kgf/m^2$ | 80 ℃ Gelation Time |
|---|---|---|---|---|---|
| Phenylisocyanate | 1 | 50 sec | 30 min | 110 | > 2hr |
| Tolylene diisocyanate | 1 | 70 sec | 40 min | 150 | > 2hr |
| 3-Isocyanatopropyl methacrylate | 1 | 60 sec | 30 min | 120 | > 2hr |
| 3-Triethoxypropyl isocyanate | 1 | 80 sec | 50 min | 160 | > 2hr |
| 3-Triethoxypropyl isocyanate | 0.5 | 90 sec | 60 min | 130 | > 2hr |

Example 3

1 part of o-benzoic sulfimide was added to a mixture consisting of 50 parts of dimethacrylate of a bisphenol A - ethylene oxide 2 mole adduct and 50 parts of a hydroxyl group-containing polymerizable methacrylic ester shown in Table 3, followed by stirring at 50°C for 4 hours, to effect dissolving. After subsequent cooling to room temperature, 0.5 part of phenylenehydrazine, 1 part of phenyl isocyanate and 0.5 part of cumene hydroperoxide were added, followed by thorough stirring, to obtain an anaerobic adhesive. Tests were conducted in the same way as in Example 1. The results obtained are as shown in Table 3.

[Table 3]

| kind of Hydroxyl-containing Polymerizable Methacrylic Ester | Set Time | Time up to Practical Strength | Bonding Strength under Shear $kgf/m^2$ | 80 ℃ Gelation Time |
|---|---|---|---|---|
| 2-Hydroxyethyl methacrylate | 40 sec | 30 min | 160 | > 2hr |
| 2-Hydroxypropyl methacrylate | 40 sec | 30 min | 150 | > 2hr |
| Polyethylene glycol methacrylate | 50 sec | 40 min | 130 | > 2hr |

Comparative Example 1

Adhesives were prepared by excluding one ingredient respectively from compositions according to the present invention, and tests were conducted in the same manner as in Example 1. Tables 4 and 5 show compositions and physical properties, respectively. As is apparent from Table 5, if even one ingredient is omitted from a composition according to the present invention, a desired adhesive is not obtained. In the systems not containing o-benzoic sulfimide and hydrazine compound, respectively, the initial set time is longer than 20 minutes, and in the system not containing an isocyanate compound, the gelation stability is very bad. Further, the hydroperoxide-free system is very poor in adhesive property.

[Table 4]

| No. | o-Benzoic Sulfimide | Phyenyl Hydrazine | Phenyl Isocyanate | Cumene Hydroperoxide |
|---|---|---|---|---|
| 1 | 0 | 1 | 0.5 | 0.5 |
| 2 | 1 | 0 | 0.5 | 0.5 |
| 3 | 1 | 1 | 0 | 0.5 |
| 4 | 1 | 1 | 0.5 | 0 |

[Table 5]

| No. | Initial Set Time | Time up to Practical Strength | Bonding Strength under Shear $kgf/m^2$ | 80 ℃ Gelation Time |
|---|---|---|---|---|
| 1 | >30 min | >5 hr | 100 | >2 hr |
| 2 | >30 min | >5 hr | 100 | 30 min |
| 3 | 10 min | 4 hr | 150 | 20 min |
| 4 | >30 min | >5 hr | 5 | >2 hr |

Example 4

An experiment was performed in the same way as in Example 1 except that 1 part by weight of maleic anhydride was used in place of 3-isocyanatopropyl methacrylate. The results obtained are as shown in Table 6.

[Table 6]

| Hydrazine Compound | Amount | Set Time | Time up to Practical Strength | Bonding Strength under Shear $kgf/m^2$ | 80 ℃ Gelation Time |
|---|---|---|---|---|---|
| Methylhydrazine | 0.5 | 30 sec | 20 min | 130 | > 2hr |
| Phenylhydrazine | 0.5 | 20 sec | 15 min | 150 | > 2hr |
| 1, 1-Dimethylhydrazine | 0.5 | 30 sec | 20 min | 120 | > 2hr |
| 1, 1-Diphenylhydrazine | 0.5 | 20 sec | 15 min | 105 | > 2hr |
| Adipic dihydrazine | 0.5 | 40 sec | 30 min | 120 | > 2hr |
| Phenylhydrazine | 0.1 | 40 sec | 30 min | 160 | > 2hr |
| 1, 1-Dimethylhydrazine | 0.1 | 60 sec | 50 min | 130 | > 2hr |
| p-Toluenesulfonyl hydrazine | 0.5 | 30 sec | 20 min | 150 | > 2hr |
| p-Toluenesulfonyl hydrazine | 0.1 | 40 sec | 30 min | 140 | > 2hr |

Example 5

The hydrazine compounds used in Example 4 were substituted by 0.5 part of phenylhydrazine and a predetermined amount of a carboxylic acid anhydride was added, followed by thorough stirring, to prepare an anaerobic adhesive. Tests were conducted in the same manner as in Example 4. The results obtained are as shown in Table 7.

[Table 7]

| Carboxylic acid Anhydride | Amount | Set Time | Time up to Practical Strength | Bonding Strength under Shear $kgf/m^2$ | 80 ℃ Gelation Time |
|---|---|---|---|---|---|
| Maleic anhydride | 1 | 20 sec | 15 min | 150 | > 2hr |
| Phthalic anhydride | 1 | 30 sec | 20 min | 130 | > 2hr |
| Methyltetra-hydrophthalic anhydride | 1 | 30 sec | 20 min | 120 | > 2hr |
| Maleic anhydride | 0.1 | 60 sec | 50 min | 160 | > 2hr |
| Phthalic anhydride | 0.5 | 40 sec | 30 min | 150 | > 2hr |

Example 6

1 part of o-benzoic sulfimide was added to a mixture consisting of 50 parts of dimethacrylate of a bisphenol A - ethylene oxide 2 mole adduct and 50 parts of a hydroxyl group-containing polymerizable methacrylic ester, followed by stirrinig at 50°C for 4 hours to effect dissolving. After subsequent cooling to room temperature, 0.5 part of phenylhydrazine, 1 part of maleic anhydride and 0.5 part of cumene hydroperoxide were added, followed by thorough stirring, to prepare an anaerobic adhesive. Tests were conducted in the same way as in Example 1. The results obtained are as shown in Table 8.

[Table 8]

| kind of Hydroxyl-containing Polymerizable Methacrylic Ester | Set Time | Time up to Practical Strength | Bonding Strength under Shear $kgf/m^2$ | 80 ℃ Gelation Time |
|---|---|---|---|---|
| 2-Hydroxyethyl methacrylate | 15 sec | 20 min | 130 | > 2hr |
| 2-Hydroxypropyl methacrylate | 15 sec | 20 min | 150 | > 2hr |
| Polyethylene glycol methacrylate | 20 sec | 30 min | 160 | > 2hr |

[Effects of the Invention]

The anaerobic adhesive composition of the present invention is a very quick curing composition in a one-pack form and is highly stable in preservation and can stand a long-term preservation. Further, the adhesive once cured is superior in the resistance to heat, water, oil and weather, thus greatly contributing to the development of industry.

## Claims

1. An anaerobic adhesive composition having a quick curing property comprising a polymerizable acrylate ester and, (a) o-benzoic sulfimide, (b) an organic hydrazine compound, (c) an organic isocyanate compound or a carboxyic acid anhydride and (d) an organic peroxide.

2. An anaerobic adhesive composition as set forth in claim 1, wherein 0.1-5 parts by weight of the o-benzoic sulfimide, 0.001-5 parts by weight of the organic hydrazine compound, 0.01-5 parts by weight of the organic isocyanate compound or the carboxylic acid anhydride and 0.05-5 parts by weight of the organic peroxide are used per 100 parts by weight of the polymerizable acrylate ester.

European Patent Office

# EUROPEAN SEARCH REPORT

Application Number

EP 92 30 1232

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 081 972 (LOCTITE CORPORATION) *claims* * page 12, line 15 - line 35 * | 1-2 | C09J4/00 |
| Y | US-A-4 302 570 (WERBER) * the whole document * | 1-2 | |
| Y | US-A-4 321 349 (RICH) * the whole document * | 1-2 | |
| A | US-A-3 425 988 (GORMAN ET AL.) | 1-2 | |

TECHNICAL FIELDS SEARCHED (Int. Cl.5 )

C09J

The present search report has been drawn up for all claims

| Place of search | Date of completion of the search | Examiner |
|---|---|---|
| THE HAGUE | 14 APRIL 1992 | ANDRIOLLO G.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)